(19) Europäisches Patentamt
European Patent Office
Office européen des brevets

(11) EP 1 391 958 A1

(12) **EUROPEAN PATENT APPLICATION**
published in accordance with Art. 158(3) EPC

(43) Date of publication:
**25.02.2004 Bulletin 2004/09**

(21) Application number: **02717127.1**

(22) Date of filing: **12.04.2002**

(51) Int Cl.[7]: **H01M 10/40**, H01M 6/18, H01B 1/06, H01G 9/038, C08F 8/00, C08L 29/04, C08K 3/00

(86) International application number:
**PCT/JP2002/003670**

(87) International publication number:
**WO 2002/087003 (31.10.2002 Gazette 2002/44)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.04.2001 JP 2001123374**

(71) Applicant: **Nisshinbo Industries, Inc.**
**Chuo-ku, Tokyo 103-8650 (JP)**

(72) Inventors:
- **SATO, Takaya,**
  **c/o NISSHINBO INDUSTRIES, INC.**
  **Chiba-shi,Chiba 267-0056 (JP)**
- **MARUO, Tatsuya,**
  **c/o NISSHINBO INDUSTRIES, INC.**
  **Chiba-shi, Chiba 267-0056 (JP)**
- **BANNO, Kimiyo,**
  **c/o NISSHINBO INDUSTRIES, INC.**
  **Chiba-shi, Chiba 267-0056 (JP)**

(74) Representative: **Stuart, Ian Alexander et al**
**MEWBURN ELLIS**
**York House**
**23 Kingsway**
**London WC2B 6HP (GB)**

(54) **COMPOSITION FOR POLYMER GEL ELECTROLYTE, POLYMER GEL ELECTROLYTE, AND SECONDARY BATTERY AND ELECTRIC DOUBLE LAYER CAPACITOR EACH EMPLOYING THE ELECTROLYTE**

(57) A polymer gel electrolyte composition is composed primarily of (A) a polymeric compound having an average degree of polymerization of at least 20 which contains polyvinyl alcohol units of the following general formula (1):

$$-(CH_2-\underset{\displaystyle OH}{\underset{|}{C}H})_n- \qquad (1)$$

wherein n is a number of at least 20 and some or all of the hydroxyl groups on the polyvinyl alcohol units are substituted with cyanated monovalent hydrocarbon groups; (B) an ion-conductive salt; (C) a compound having at least two reactive double bonds on the molecule; and (D) an organic electrolyte solution.

EP 1 391 958 A1

# FIG.1

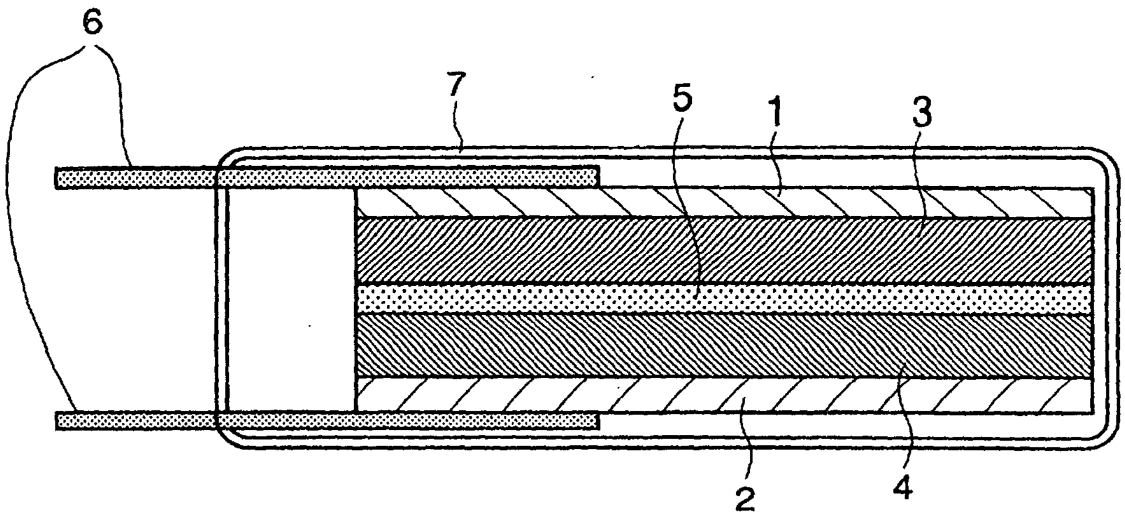

## Description

### TECHNICAL FIELD

The present invention relates to polymer gel electrolyte compositions and polymer gel electrolytes, and also to secondary cells and electrical double-layer capacitors made using such electrolytes.

### BACKGROUND ART

Electrolytes used in electrochemical devices such as secondary cells and capacitors have until now been primarily low-molecular-weight substances that are liquid at or above room temperature, such as water, ethylene carbonate, propylene carbonate, and tetrahydrofuran. In lithium-based cells in particular, use is commonly made of low-molecular-weight organic liquid electrolytes which tend to evaporate, ignite and burn rather easily. To ensure long-term stability, the airtightness of the container must be increased by using a metal can as the outer cell enclosure.

As a result, electrochemical devices made using low-molecular-weight organic liquid electrolytes are heavier and the production process is complex, neither of which is desirable.

By contrast, the use of a polymer as the electrolyte enables an electrolyte to be obtained which has a very low volatility and is not prone to evaporation. Moreover, a polymer electrolyte having a sufficiently high molecular weight can even be used as a so-called solid electrolyte that does not exhibit fluidity at or above room temperature. Such polymer electrolytes thus offer the dual advantages of acting as a solvent for ion-conductive salts and of solidifying the electrolyte.

Furthermore, cells which are made using a solid polymer electrolyte pose no risk of equipment damage due to liquid leakage and allow for a cell design in which the electrolyte serves also as the separator, thus facilitating cell miniaturization.

Such polymer electrolytes have been described in the literature. In 1978, researchers led by Armond at l'Université de Grenoble in France discovered that lithium perchlorate dissolves in solid polyethylene oxide and reported that when lithium salt is dissolved to a concentration of 1 M in polyethylene oxide having a molecular weight of about 2,000, the resulting complex exhibits an ionic conductivity at room temperature of about $10^{-7}$ S/cm. They also found that when 1 M lithium salt is dissolved in polyethylene oxide having a molecular weight of about 200, which is liquid at room temperature, the ionic conductivity at room temperature is about $10^{-4}$ to $10^{-5}$ S/cm. Thus, it is known that polymeric substances such as polyethylene oxide having the ability to dissolve ion-conductive salts function as electrolytes.

Since then, similar research has been carried out on a broad range of largely polyethylene oxide-related polymers, such as polypropylene oxide, polyethyleneimine, polyurethane and polyester.

As noted above, polyethylene oxide, the most thoroughly investigated of these polymers, has a good ability to dissolve ion-conductive salts. However, because it is a semi-crystalline polymer, when a large amount of metallic salt is dissolved therein, the salt forms a pseudo-crosslinked structure between the polymer chains that leads to crystallization of the polymer. As a result, the actual ionic conductivity is much lower than the predicted value.

This can be explained as follows. An ion conductor dissolved in a linear polyether-based polymer matrix such as polyethylene oxide migrates with the local movement of polymer chain segments within amorphous regions of the polymer matrix at temperatures above the glass transition temperature of the matrix. The cations which carry the ionic conductivity are strongly coordinated by the polymer chains, so cation mobility is strongly influenced by local movement of the polymer chains.

For this reason, a linear polyether-based polymer such as polyethylene oxide is a poor choice as the matrix polymer for an ion-conductive polymer electrolyte. According to the literature to date, ion-conductive polymer electrolytes composed entirely of a linear polymer such as polyethylene oxide, polypropylene oxide or polyethyleneimine generally have an ionic conductivity at room temperature of about $10^{-7}$ S/cm, and at best not higher than about $10^{-6}$ S/cm.

That is, such solid electrolytes have a lower ionic conductivity than liquid electrolytes, making it difficult to achieve a sufficiently large cell capacity.

The inventors thus realized that, to obtain an ion-conductive polymer electrolyte having a high conductivity, a molecule would have to be designed which enables many amorphous regions of good ion conductor mobility to exist within a matrix polymer and which does not crystallize even when an ion-conductive salt is dissolved therein to a high concentration. We have already shown that polymer electrolyte-forming polymers having a high ionic conductivity can be prepared by introducing polyoxyalkylene branched chains onto a natural polymeric substance such as cellulose and capping the terminal hydroxyl groups with suitable substituents, and that such polymers can be used to form solid polymer electrolytes having an excellent strength and a high conductivity (JP-A 8-225626 and JP-A 9-50824).

However, solid electrolytes containing no liquid components whatsoever usually have a lower ionic conductivity than liquid electrolytes. Numerous efforts have been made to confer solid electrolytes with a higher ionic conductivity.

Polymer gel electrolytes prepared as a complex of a liquid electrolyte with a solid polymer electrolyte have recently been developed and applied in practice as one solution to this problem. Such polymer gel electrolytes are gel-like materials composed of a polymer network structure within which a liquid electrolyte is retained. Compared with earlier solid electrolytes, contact with the active material is good and the presence of a liquid electrolyte ensures a better ionic conductivity.

In addition, we earlier described how excellent solid polymer electrolytes can be prepared using a semi-interpenetrating polymer network structure (abbreviated hereinafter as "semi-IPN structure") as the matrix polymer in the solid polymer electrolyte. We also disclosed that, when employed in a polymer gel electrolyte, such a structure is able to provide polymer gel electrolytes endowed with excellent electrical conductivity, gel strength and adhesion (WO 00/56815 and WO 00/57440).

Batteries and capacitors made with such polymer gel electrolytes are generally manufactured as follows. In the case of lithium ion cells, a polymer gel electrolyte composition containing an ion-conductive salt such as a lithium salt, an organic electrolyte solution and a polymerizable constituent is coated onto the surface of a positive electrode or a negative electrode. The composition is then heated or exposed to ultraviolet light to polymerize and cure the polymerizable compound therein and thus form a polymer gel electrolyte membrane on the electrode surface, following which a counterelectrode (an electrode of the opposite polarity) is placed thereon. Alternatively, polymerization and curing may be carried out after first placing the counterelectrode on the coated electrode. This procedure gives a layered cell assembly composed of a positive electrode and a negative electrode with a polymer gel electrolyte membrane situated therebetween. The cell assembly is then placed within an outer enclosure such as a battery can, thereby giving a polymer gel electrolyte cell.

In another method of manufacture, a cell assembly is constructed by arranging a positive electrode and a carbon electrode opposite each other across an intervening separator material. The cell assembly is placed in an outer enclosure, following which a polymer gel electrolyte composition containing an ion-conductive salt such as a lithium salt and a polymerizable compound-containing organic electrolyte solution is poured into the enclosure so as enable the composition to penetrate the space between the positive and negative electrodes and voids within the positive and negative electrodes. The polymerizable compound within the polymer gel electrolyte composition is then polymerized and cured, forming a polymer gel electrolyte membrane between the positive and negative electrodes. This particular method is advantageous because it can be used with liquid electrolyte cell manufacturing equipment.

When an electrochemical device such as a secondary cell is produced in this way by a method that involves introducing a polymer gel electrolyte composition into a cell assembly and curing, compositions having a low viscosity easily penetrate uniformly and rapidly into the cell assembly and thus provide better productivity and performance. A need has thus been felt for the development of polymer gel electrolyte compositions of lower viscosity.

The linear polymer compounds used in the polymer gel electrolytes with a semi-IPN structure we earlier disclosed have long side chains which entangle to a considerable degree, sometimes giving the polymer gel electrolyte composition an undesirably high viscosity.

## DISCLOSURE OF THE INVENTION

It is therefore an object of the invention to provide polymer gel electrolyte compositions which yield high-strength polymer gel electrolytes having a semi-IPN structure and excellent shape retention, ionic conductivity and tackiness, and which are not subject to a high increase in viscosity prior to gelation. Another object of the invention is to provide polymer gel electrolytes endowed with the above properties. Further objects are to provide secondary cells and electrical double-layer capacitors made using such electrolytes.

The inventors have discovered that the use, in a polymer gel electrolyte composition containing a linear polymer, an ion-conductive salt, a compound having at least two reactive double bonds on the molecule and an organic electrolyte solution, of a linear polymer containing polyvinyl alcohol units in which some or all of the hydroxyl groups are substituted with cyanated monovalent hydrocarbon groups enables the polymer gel electrolyte composition to be held to a low viscosity, allowing penetration of the composition into the cell assembly to be carried out rapidly and thus making it possible to enhance the manufacturability and performance of cells and electrical double-layer capacitors fabricated therewith. We have also found that polymer gel electrolytes obtained by gelating such compositions have a semi-IPN structure, excellent shape retention, strength, ionic conductivity and tackiness, and are highly suitable for use in the manufacture of secondary cells and electrical double-layer capacitors.

Accordingly, in a first aspect, the invention provides a polymer gel electrolyte composition that includes (A) a polymeric compound having an average degree of polymerization of at least 20 which contains polyvinyl alcohol units of the following general formula (1):

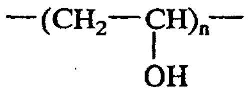

(1)

wherein n is a number of at least 20 and some or all of the hydroxyl groups on the polyvinyl alcohol units are substituted with cyanated monovalent hydrocarbon groups; (B) an ion-conductive salt; (C) a compound having at least two reactive double bonds on the molecule; and (D) an organic electrolyte solution.

Preferably, the polymeric compound is included in an amount, based on the compound having at least two reactive double bonds, of 0.01 to 10 wt%. The cyanated monovalent hydrocarbon group in the polymeric compound is typically cyanoethyl.

In a second aspect, the invention provides a polymer gel electrolyte prepared by gelating the polymer gel electrolyte composition of the above first aspect of the invention, which electrolyte has a semi-interpenetrating polymer network structure wherein molecular chains of the polymeric compound are intertwined with a three-dimensional polymer network structure formed by crosslinking the compound having at least two reactive double bonds.

In a third aspect, the invention provides a secondary cell composed of a positive electrode, a negative electrode and an electrolyte, wherein the electrolyte is a polymer gel electrolyte according to the above second aspect of the invention.

In a fourth aspect, the invention provides an electrical double-layer capacitor composed of a pair of polarizable electrodes and an electrolyte disposed therebetween, wherein the electrolyte is a polymer gel electrolyte according to the above second aspect of the invention.

## BRIEF DESCRIPTION OF THE DRAWINGS

FIG. 1 is a sectional view of a laminate-type secondary cell according to one embodiment of the invention.

## BEST MODE FOR CARRYING OUT THE INVENTION

The invention is described more fully below.

As noted above, the polymer gel electrolyte composition according to the invention is composed of (A) a polymeric compound having an average degree of polymerization of at least 20 which contains polyvinyl alcohol units of general formula (1) below

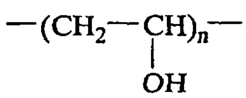

(1)

wherein n is a number of at least 20 and some or all of the hydroxyl groups on the polyvinyl alcohol units are substituted with cyanated monovalent hydrocarbon groups; (B) an ion-conductive salt; (C) a compound having at least two reactive double bonds on the molecule; and (D) an organic electrolyte solution.

Component A is a polyvinyl alcohol unit-containing polymeric compound having an average degree of polymerization of at least 20, preferably at least 300, and most preferably at least 1,000 (i.e., n in above formula (1) is at least 20, preferably at least 300, and most preferably at least 1,000). Some or all of the hydroxyl groups on the polyvinyl alcohol units are substituted with cyanated monovalent hydrocarbon groups.

The average degree of polymerization, which refers herein to the number-average degree of polymerization, is not subject to any particular upper limit, although it is preferably no higher than 10,000. Polymeric compounds with too high a degree of polymerization confer the composition with excessive viscosity when added thereto in a small amount, making the composition difficult to handle. Accordingly, the range in the degree of polymerization is preferably 20 to 10,000 monomeric units.

The number-average degree of polymerization of the polymeric compound is calculated from the number-average molecular weight of the compound, as determined by gel permeation chromatography (GPC).

Illustrative, non-limiting examples of the cyanated monovalent hydrocarbon groups include cyanoethyl, cyanobenzyl, cyanobenzoyl and other substituents composed of a cyano group bonded to an alkyl group. The use of

cyanoethyl groups is especially desirable in that it makes the side chains on the polyvinyl alcohol short.

Because polyvinyl alcohols in which the hydroxyl groups are substituted with such cyanated monovalent hydrocarbon groups have a structure with relatively short side chains, when such a polymeric compound is dissolved in an electrolyte solution, the displaced volume within the solution is small and side chain entanglement is limited. Hence, at the same temperature and concentration, polymer gel electrolyte compositions containing such polyvinyl alcohols have less tendency to undergo a large increase in viscosity than compositions containing other polymers with about the same average molecular weight but longer side chains.

For this reason, the polymer gel electrolyte compositions of the invention are able to uniformly and rapidly penetrate into a cell assembly, for instance, thus making it possible to enhance the productivity and performance of secondary cells and other electrochemical devices in which they are used.

No particular limitation is imposed on the average degree of molar substitution by cyanated monovalent hydrocarbon groups for hydroxyl groups on the polyvinyl alcohol units. The proportion of hydroxyl groups substituted with cyanated monovalent hydrocarbon groups is preferably at least 70 mol%, more preferably at least 90 mol%, and most preferably at least 95 mol%.

The average molar substitution serves here as an indicator of the number of moles of cyanated monovalent hydrocarbon groups that have been introduced onto the molecule per vinyl alcohol unit.

A low average molar substitution may give the polyvinyl alcohol a low dielectric constant, possibly lowering ion mobility and ionic conductivity. Moreover, the presence of many hydroxyl groups may give rise to hydrogen elimination in a high-voltage cell system. For these reasons, a higher average molar substitution is preferred.

The extent to which the polyvinyl alcohol unit-containing polymeric compound bears cyanated monovalent hydrocarbon groups can be determined by using various analytical techniques such as NMR and elemental analysis, although a method of determination based on the weight of the polymer charged as a reactant and the increase in weight of the polymer formed by the reaction is simple and convenient. For example, determination from the yield may be carried out by precisely measuring both the weight of the polyvinyl alcohol unit-containing polymeric compound charged into the reaction and the weight of the cyanated monovalent hydrocarbon group-bearing polyvinyl alcohol unit-containing polymeric compound obtained from the reaction, then using this difference to calculate the quantity of cyanated monovalent hydrocarbon groups that have been introduced onto the molecule (referred to herein as the "average molar substitution").

It is also advantageous for the polymeric compound to include cyanated monovalent hydrocarbon groups such as cyanoethyl in combination with trialkylsilyl groups such as trimethylsilyl. In such cases, the amounts of these two types of groups are typically such that the cyanated monovalent hydrocarbon groups account for 70 to 97 mol%, and preferably 90 to 97 mol%, of all the end groups (hydroxyl groups) on the molecular chain, and the trialkylsilyl groups account for 3 to 30 mol%, and preferably 3 to 10 mol%, of all the end groups (hydroxyl groups). Polymers in which a combination of cyanated monovalent hydrocarbon groups and trialkylsilyl groups has been thus inserted exhibit excellent electrical conductivity and excellent hydrophobic properties.

Any suitable known method may be employed for introducing cyanated monovalent hydrocarbon groups onto the polyvinyl alcohol unit-containing polymeric compound.

For example, cyanoethyl groups may be introduced by mixing the polyvinyl alcohol unit-containing polymeric compound with dioxane and acrylonitrile, adding a sodium hydroxide solution to the resulting mixed solution and stirring to effect reaction, thereby yielding a cyanoethylated polyvinyl alcohol in which cyanoethyl groups have been introduced onto some or all the side chains.

Cyanobenzoyl group insertion may be carried out by mixing a polyvinyl alcohol unit-containing polymeric compound with dioxane, then first adding pyridine and subsequently adding in a dropwise manner a solution of cyanobenzoyl chloride dissolved in dioxane. The resulting solution is reacted at a specific temperature, after which the reaction product is poured into a methanol-water (3:4) mixture and the precipitate that settles out is collected. The precipitate is then dissolved in N,N-dimethylsulfoxide, and the solution is placed in a dialysis tube and dialyzed. The precipitate which settles out during dialysis is collected, rinsed with water and dried in vacuo, yielding the final cyanobenzoylated polyvinyl alcohol.

The ion-conductive salt serving as component B of the inventive polymer gel electrolyte composition may be any ion-conductive salt, including alkali metal salts and quaternary ammonium salts, that is used in devices such as lithium secondary cells and electrical double-layer capacitors. Suitable alkali metal salts include lithium salts, sodium salts and potassium salts Specific examples include:

(1) lithium salts such as lithium tetrafluoroborate, lithium hexafluorophosphate, lithium perchlorate, lithium trifluoromethanesulfonate, the sulfonyl imide lithium salts of general formula (2) below

$$(R^1\text{-}SO_2)(R^2\text{-}SO_2)NLi \qquad (2),$$

the sulfonyl methide lithium salts of general formula (3) below

$$(R^3\text{-}SO_2)(R^4\text{-}SO_2)(R^5\text{-}SO_2)CLi \qquad (3),$$

lithium acetate, lithium trifluoroacetate, lithium benzoate, lithium p-toluenesulfonate, lithium nitrate, lithium bromide, lithium iodide and lithium tetraphenylborate;

(2) sodium salts such as sodium perchlorate, sodium iodide, sodium tetrafluoroborate, sodium hexafluorophosphate, sodium trifluoromethanesulfonate and sodium bromide; and

(3) potassium salts such as potassium iodide, potassium tetrafluoroborate, potassium hexafluorophosphate and potassium trifluoromethanesulfonate.

In above formulas (2) and (3), $R^1$ to $R^5$ are each independently $C_{1-4}$ perfluoroalkyl groups which may have one or two ether linkages.

Illustrative examples of the sulfonyl imide lithium salts of general formula (2) include $(CF_3SO_2)_2NLi$, $(C_2F_5SO_2)_2NLi$, $(C_3F_7SO_2)_2NLi$, $(C_4F_9SO_2)_2NLi$, $(CF_3SO_2)(C_2F_5SO_2)NLi$, $(CF_3SO_2)(C_3F_7SO_2)NLi$, $(CF_3SO_2)(C_4F_9SO_2)NLi$, $(C_2F_5SO_2)(C_3F_7SO_2)NLi$, $(C_2F_5SO_2)(C_4F_9SO_2)NLi$ and $(CF_3OCF_2SO_2)_2NLi$.

Illustrative examples of the sulfonyl methide lithium salts of general formula (3) include $(CF_3SO_2)_3CLi$, $(C_2F_5SO_2)_3CLi$, $(C_3F_7SO_2)_3CLi$, $(C_4F_9SO_2)_3CLi$, $(CF_3SO_2)_2(C_2F_5SO_2)CLi$, $(CF_3SO_2)_2(C_3F_7SO_2)CLi$, $(CF_3SO_2)_2(C_4F_9SO_2)CLi$, $(CF_3SO_2)(C_2F_5SO_2)_2CLi$, $(CF_3SO_2)(C_3F_7SO_2)_2CLi$, $(CF_3SO_2)(C_4F_9SO_2)_2CLi$, $(C_2F_5SO_2)_2(C_3F_7SO_2)CLi$, $(C_2F_5SO_2)_2(C_4F_9SO_2)CLi$ and $(CF_3OCF_2SO_2)_3CLi$.

Quaternary ammonium salts suitable for use in electrical double-layer capacitors include tetramethylammonium hexafluorophosphate, tetraethylammonium hexafluorophosphate, tetrapropylammonium hexafluorophosphate, methyltriethylammonium hexafluorophosphate, tetraethylammonium tetrafluoroborate and tetraethylammonium perchlorate. Other quaternary salts that may be similarly used include acyclic amidines, cyclic amidines (e.g., imidazoles, imidazolines, pyrimidines, 1,5-diazabicyclo[4.3.0]non-5-ene (DBN), 1,8-diazabicyclo[5.4.0]undec-7-ene (DBU)), pyrroles, pyrazoles, oxazoles, thiazoles, oxadiazoles, thiadiazoles, triazoles, pyridines, pyrazines, triazines, pyrrolidines, morpholines, piperidines and piperazines.

Of the above electrolyte salts, lithium tetrafluoroborate, lithium hexafluorophosphate, sulfonyl imide lithium salts of general formula (2) and sulfonyl methide lithium salts of general formula (3) are preferred in polymer gel electrolyte compositions for producing lithium-based cells because of their particularly high ionic conductivity and excellent thermal stability. These electrolyte salts may be used alone or as combinations of two or more thereof.

Aside from the above-mentioned electrolyte salts, other electrolyte salts commonly employed in electrical double-layer capacitors may be used in polymer gel electrolyte compositions for producing electrical double-layer capacitors. Preferred examples include salts obtained by combining a quaternary onium cation of the general formula $R^6R^7R^8R^9N^+$ or $R^6R^7R^8R^9P^+$ (wherein $R^6$ to $R^9$ are each independently alkyls of 1 to 10 carbons) with an anion such as $BF_4^-$, $N(CF_3SO_2)_2^-$, $PF_6^-$ or $ClO_4^-$.

Illustrative examples include $(C_2H_5)_4PBF_4$, $(C_3H_7)_4PBF_4$, $(C_4H_9)_4PBF_4$, $(C_6H_{13})_4PBF_4$, $(C_4H_9)_3CH_3PBF_4$, $(C_2H_5)_3(Ph\text{-}CH_2)PBF_4$ (wherein Ph stands for phenyl), $(C_2H_5)_4PPF_6$, $(C_2H_5)PCF_3SO_2$, $(C_2H_5)_4NBF_4$, $(C_4H_9)_4NBF_4$, $CH_3(C_2H_5)_3NBF_4$, $(C_6H_{13})_4NBF_4$, $(C_2H_5)_6NPF_6$, $LiBF_4$ and $LiCF_3SO_3$. These may be used alone or as combinations of two or more thereof.

The concentration of the ion-conductive salt in the polymer gel electrolyte composition is generally 0.05 to 3 mol/L, and preferably 0.1 to 2 mol/L. Too low a concentration may make it impossible to obtain a sufficient ionic conductivity. On the other hand, if the concentration is too high, the salt may not dissolve completely in the polymer gel electrolyte composition.

Component C of the polymer gel electrolyte composition of the invention is a compound having at least two reactive double bonds on the molecule. It is added to increase physical strength, including shape retention, when the gel electrolyte having a semi-IPN structure obtained by gelating the composition is formed into a thin membrane and used as the electrolyte in an electrochemical device such as a secondary cell. The reaction of this compound leads to the formation of a three-dimensional network structure, giving the gel a semi-IPN structure and thus increasing the shape retention of the resulting electrolyte.

Illustrative examples of the compound having two or more reactive double bonds which serves as component C include divinylbenzene, divinylsulfone, allyl methacrylate, ethylene glycol dimethacrylate, diethylene glycol dimethacrylate, triethylene glycol dimethacrylate, polyethylene glycol dimethacrylate (average molecular weight, 200 to

1,200), 1,3-butylene glycol dimethacrylate, 1,6-hexanediol dimethacrylate, neopentyl glycol dimethacrylate, polypropylene glycol dimethacrylate (average molecular weight, 400), 2-hydroxy-1,3-dimethacryloxypropane, 2,2-bis[4(methacryloxyethoxy)phenyl]propane, 2,2-bis[4-(methacryloxyethoxy-diethoxy)phenyl]propane, 2,2-bis[4-(methacryloxyethoxy-polyethoxy)phenyl]propane, ethylene glycol diacrylate, diethylene glycol diacrylate, triethylene glycol diacrylate, polyethylene glycol diacrylate (average molecular weight, 200 to 1,000), 1,3-butylene glycol diacrylate, 1,6-hexanediol diacrylate, neopentyl glycol diacrylate, polypropylene glycol diacrylate (average molecular weight, 400), 2-hydroxy-1,3-diacryloxypropane, 2,2-bis[4-(acryloxyethoxy)phenyl]propane, 2.2-bis[4-(acryloxyethoxy-diethoxy)phenyl] propane, 2,2-bis[4-(acryloxyethoxy-polyethoxy)phenyl]propane, trimethylolpropane triacrylate, trimethylolpropane trimethacrylate, tetramethylolmethane triacrylate, tetramethylolmethane tetraacrylate, water-soluble urethane diacrylate, water-soluble urethane dimethacrylate, tricyclodecane dimethanol acrylate, hydrogenated dicyclopentadiene diacrylate, polyester diacrylate and polyester dimethacrylate.

If necessary, a compound containing an acrylic or methacrylic group may be added. Examples of such compounds include acrylates and methacrylates such as glycidyl methacrylate, glycidyl acrylate and tetrahydrofurfuryl methacrylate, as well as methoxyethylene glycol methacrylate, methoxydiethylene glycol methacrylate, methoxytriethylene glycol methacrylate (average molecular weight, 200 to 1,200), methacryloyl isocyanate, 2-hydroxyemthyl methacrylic acid and N,N-dimethylaminoethyl methacrylic acid. Other reactive double bond-containing compounds may be added as well, such as acrylamides (e.g., N-methylolacrylamide, methylenebisacrylamide, diacetoneacrylamide), and vinyl compounds such as vinyloxazolines and vinylene carbonate.

To form a three-dimensional network structure, a compound having at least two reactive double bonds must be added. That is, a three-dimensional network structure cannot be formed with only compounds such as methyl methacrylate that have but a single reactive double bond. Some addition of a compound bearing at least two reactive double bonds is required.

Of the foregoing compounds having two or more reactive double bonds, especially preferred reactive monomers include polyoxyalkylene component-bearing diesters of general formula (4) below. The use of the latter in combination with a polyoxyalkylene component-bearing monoester of formula (5) below and a triester compound is recommended.

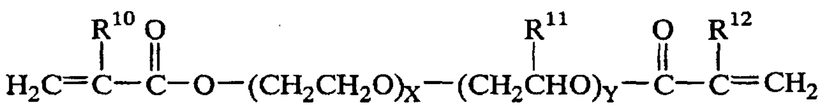

(4)

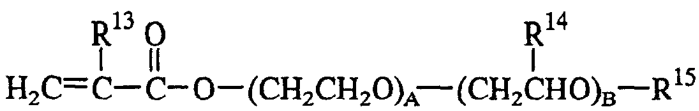

(5)

In formula (4), $R^{10}$ to $R^{12}$ are each independently a hydrogen atom or an alkyl group having 1 to 6 carbons, and preferably 1 to 4 carbons, such as methyl, ethyl, n-propyl, 1-propyl, n-butyl, 1-butyl, s-butyl and t-butyl; and X and Y satisfy the condition $X \geq 1$ and $Y \geq 0$ or the condition $X \geq 0$ and $Y \geq 1$. $R^{10}$ to $R^{12}$ are most preferably methyl, ethyl, n-propyl, i-propyl, n-butyl, i-butyl, s-butyl or t-butyl.

In formula (5), $R^{13}$ to $R^{15}$ are each independently a hydrogen atom or an alkyl group having 1 to 6 carbons, and preferably 1 to 4 carbons, such as methyl, ethyl, n-propyl, i-propyl, n-butyl, 1-butyl, s-butyl and t-butyl; and A and B satisfy the condition $A \geq 1$ and $B \geq 0$ or the condition $A \geq 0$ and $B \geq 1$. $R^{13}$ to $R^{15}$ are most preferably methyl, ethyl, n-propyl, i-propyl, n-butyl, i-butyl, s-butyl or t-butyl.

Preferred compounds of formula (4) are those in which X is 9, Y is 0, and $R^{10}$ and $R^{12}$ are both $CH_3$. Preferred compounds of formula (5) are those in which A is 2 or 9, B is 0, and $R^{13}$ and $R^{15}$ are both $CH_3$.

The triester compound is preferably trimethylolpropane trimethacrylate.

Typically, the above-described polyoxyalkylene component-bearing diester and the polyoxyalkylene component-bearing monoester are heated or exposed to a suitable form of radiation, such as ultraviolet light, electron beams, x-rays, gamma rays, microwaves or radio-frequency radiation, within a mixture with a polyvinyl alcohol derivative, an ion-conductive salt and an organic electrolyte solution, so as to form a semi-IPN type three-dimensional crosslinked network structure.

The above-described polyoxyalkylene component-bearing diester, when added alone to the polymeric compound serving as component A and subjected to polymerization, generally forms a three-dimensional network structure, and is therefore capable of forming a semi-IPN structure. However, as already noted, a polyoxyalkylene component-bearing monoester, which is a monofunctional monomer, may be added to the polyoxyalkylene component-bearing diester to introduce polyoxyalkylene branched chains onto the three-dimensional network.

The relative proportions of the polyoxyalkylene component-bearing diester to the monoester and the triester are suitably selected according to the length of the polyoxyalkylene components and are not subject to any particular limitation. However, to enhance the gel strength, it is preferable for the diester/monoester weight ratio to be in a range of 0.1 to 2, and especially 0.3 to 1.5, and for the diester/triester weight ratio to be in a range of 2 to 15, and especially 3 to 10.

Examples of the organic electrolyte solution serving as component D of the inventive polymer gel electrolyte composition include cyclic and acyclic carbonates, acyclic carboxylates, cyclic and acyclic ethers, phosphates, lactone compounds, nitrile compounds and amide compounds, as well as mixtures thereof.

Examples of suitable cyclic carbonates include alkylene carbonates such as propylene carbonate, ethylene carbonate and butylene carbonate. Examples of suitable acyclic carbonates include dialkyl carbonates such as dimethyl carbonate, methyl ethyl carbonate and diethyl carbonate. Examples of suitable acyclic carboxylates include methyl acetate and methyl propionate. Examples of suitable cyclic and acyclic ethers include tetrahydrofuran, 1,3-dioxolane and 1,2-dimethoxyethane. Examples of suitable phosphates include trimethyl phosphate, triethyl phosphate, ethyldimethyl phosphate, diethylmethyl phosphate, tripropyl phosphate, tributyl phosphate, tri(trifluoromethyl) phosphate, tri (trichloromethyl) phosphate, tri(trifluoroethyl) phosphate, tri(triperfluoroethyl) phosphate, 2-ethoxy-1,3,2-dioxaphosphoran-2-one, 2-trifluoroethoxy-1,3,2-dioxaphosphoran-2-one and 2-methoxyethoxy-1,3,2-dioxaphosphoran-2-one. An example of a suitable lactone compound is γ-butyrolactone. An example of a suitable nitrile compound is acetonitrile. An example of a suitable amide compound is dimethylformamide. Of these, cyclic carbonates, acyclic carbonates, phosphates and mixtures thereof are preferred because they provide a good cell performance such as high charge/discharge characteristics and high output characteristics.

The polymeric compound serving as component A is included in the inventive composition in an amount, based on the compound having at least two reactive double bonds serving as component C, of preferably 0.01 to 10 wt%, and most preferably 0.1 to 5 wt%.

At less than 0.1 wt%, the amount of component C required to convert all of the polymer gel electrolyte composition to a gel becomes large, which may lower the low-temperature characteristic and rate characteristic of the resulting cell or capacitor. On the other hand, at more than 10 wt%, the viscosity of the polymer gel electrolyte composition may become high enough to discourage the composition from fully penetrating into the cell assembly.

It is desirable to adjust the polymer gel electrolyte composition composed of above components A to D to a solution viscosity, as measured with a Brookfield viscometer at 20°C, of preferably not more than 100 cps, more preferably not more than 50 cps, and most preferably not more than 30 cps.

The polymer gel electrolyte of the invention is prepared by gelating the above-described polymer gel electrolyte composition, and has a semi-interpenetrating polymer network structure in which molecular chains of the polymeric compound serving as component A are intertwined with the three-dimensional network structure of a polymer formed by crosslinking the compound having at least two reactive double bonds serving as component C.

That is, the inventive polymer gel electrolyte has a semi-IPN structure arrived at by heating or exposing above-described components A to D to a suitable form of radiation, such as ultraviolet light, electron beams, x-rays, gamma rays, microwaves or radio-frequency radiation, so as cause the compound having at least two reactive double bonds (component C) to react or polymerize and form a three-dimensional network structure intertwined with molecular chains of the polymeric compound having cyanated monovalent hydrocarbon group-bearing polyvinyl alcohol units (component A).

There are a number of ways to prepare a polymer gel electrolyte by adding a reactive double bond-bearing compound to an organic electrolyte solution and reacting to form a three-dimensional network structure. Such methods include the following.

(1) React only the reactive double bond-bearing compound to prepare the polymer gel electrolyte. This results in the formation of a three-dimensional network structure (see Comparative Examples 1 to 3).

(2) React the reactive double bond-bearing compound with a polymeric compound to prepare the polymer gel electrolyte. This results in the formation of a semi-IPN structure.

(2-a) Cases in which the polymeric compound has long side chains (see Comparative Examples 4 and 5)

(2-b) Cases in which the polymeric compound has short side chains, such as when the compound is cyanoethylated (see Examples 1 to 3 of the invention).

Method (2) forms a semi-IPN structure, and thus enables the use of compositions which yield high-strength

polymer gel electrolytes of better shape retention, ion conductivity and tackiness than can be obtained by method (1). Method (2-b) in particular is able to form a polymer gel electrolyte using a pregel composition in low concentration, and thus enables the use of polymer gel electrolyte compositions having a low viscosity.

It is preferable for the above polymerization reaction to be a radical reaction. Polymerization carried out using electron beams does not require the addition of a polymerization initiator (catalyst), although an initiator is generally added in other cases.

No particular limitation is imposed on the polymerization initiator, or catalyst. Any of various known polymerization initiators may be used, including photopolymerization initiators such as acetophenone, trichloroacetophenone, 2-hydroxy-2-methylpropiophenone, 2-hydroxy-2-methylisopropiophenone, 1-hydroxycyclohexyl ketone, benzoin ether, 2,2-diethoxyacetophenone and benzyl dimethyl ketal; high-temperature initiators such as cumene hydroperoxide, t-butyl hydroperoxide, dicumyl peroxide and di-t-butylperoxide; conventional thermal polymerization initiators such as benzoyl peroxide, lauroyl peroxide, persulfates, 2,2'-azobis(2,4-dimethylvaleronitrile), 2,2'-azobis(4-methoxy-2,4-dimethylvaleronitrile) and 2 ,2'-azobisisobutyronitrile; low-temperature initiators (redox initiators) such as hydrogen peroxide-ferrous salts, persulfate-acidic sodium sulfite, cumene hydroperoxide-ferrous salts and benzoyl peroxide-dimethylaniline; and also peroxide-organometallic alkyls, triethylboron, diethylzinc, and oxygen-organometallic alkyls.

These polymerization initiators may be used alone or as a mixture of two or more thereof. The initiator is typically added in an amount of preferably 0.1 to 1 part by weight, and most preferably 0.1 to 0.8 part by weight, per 100 parts by weight of the polymer gel electrolyte composition. The addition of less than 0.1 part by weight results in a marked decline in the polymerization rate, whereas the addition of more than 1 part by weight increases the number of reaction initiation sites and may result in the formation of a low-molecular-weight compound.

Although the polymerization reaction conditions are not subject to any particular limitations, in the case of photopolymerization, for example, reaction is typically carried out by 5 to 30 minutes of exposure to 1 to 50 $mW/cm^2$ of UV light at room temperature and in air.

Polymerization by means of electron-beam irradiation is carried out at room temperature and an acceleration voltage of 150 to 300 kV. In the case of thermal polymerization, the reaction is effected by heating at 40 to 120°C for a period of 0.5 to 6 hours.

The polymer obtained by polymerization intertwines with the polymer chains on the polymeric compound having polyvinyl alcohol units substituted with cyanated monovalent hydrocarbon groups to form a firm, semi-IPN-type three-dimensional network structure. A crystalline structure does not form; rather, the matrix is amorphous.

That is, in a polymer gel electrolyte composition obtained by adding the compound having at least two reactive double bonds serving as component C to a mixture of the polymeric compound serving as component A, the ion-conductive salt serving as component B and the organic electrolyte solution serving as component D, when the compound serving as component C is reacted, it forms a three-dimensional network structure. The polymeric compound serving as component A intertwines within the three-dimensional network structure to form a firm, semi-interpenetrating polymer network structure. This structure improves the compatibility among differing polymer chains and provides a correlating increase in cohesive strength, thus having the overall effect of dramatically increasing shape retention.

Moreover, the molecular structure is amorphous and the side chains composed of cyanated monovalent hydrocarbon groups within the gel, being relatively short, do not enter into the spaces through which the ions move. Ion conductors can thus move unhindered within the molecule, and so the polymer gel electrolyte has a high conductivity on the order of $10^{-3}$ to $10^{-4}$ S/cm at room temperature. It also has a high tackiness, and poses no risk of evaporation or liquid leakage. Such qualities make it highly suitable for use as a polymer gel electrolyte in various types of secondary cells (e.g., lithium ion secondary cells) and electrical double-layer capacitors.

The polymer gel electrolyte of the invention can be formed into a thin electrolyte membrane of uniform thickness using a method such as roller coating with an applicator roll, screen coating, doctor blade coating, spin coating or bar coating.

The invention also provides secondary cells and electrical double-layer capacitors made using the above-described polymer gel electrolyte of the invention. The secondary cells and electrical double-layer capacitors according to the invention are described below.

Secondary Cell of the Invention

The secondary cell of the invention includes a positive electrode, a negative electrode and an electrolyte. The polymer gel electrolyte of the invention serves as the cell electrolyte.

The positive electrode is typically produced by coating one or both sides of a positive electrode current collector with a positive electrode binder composition composed primarily of a binder resin and a positive electrode active material. The positive electrode may also be formed by melting and blending a positive electrode binder composition composed primarily of a binder resin and a positive electrode active material, then extruding the composition as a film.

The binder resin may be the above-described matrix polymer used in the polymer gel electrolyte of the invention, or another binder resin commonly employed as an electrode binder resin in secondary cells. Having the binder resin be composed of the same polymeric material as the matrix polymer in the polymer gel electrolyte is desirable for lowering the internal resistance of the cell.

The positive electrode current collector may be made of a suitable material such as stainless steel, aluminum, titanium, tantalum or nickel. Of these, aluminum is especially preferred both in terms of performance and cost. The current collector used may be in any of various forms, including foil, expanded metal, sheet, foam, wool, or a three-dimensional structure such as a net.

The positive electrode active material is selected as appropriate for the electrode application, the type of cell and other considerations. For instance, examples of positive electrode active materials that are suitable for use in the positive electrode of a lithium secondary cell include group I metal compounds such as CuO, $Cu_2O$, $Ag_2O$, CuS and $CuSO_2$; group IV metal compounds such as TiS, $SiO_2$ and SnO; group V metal compounds such as $V_2O_5$, $V_6O_{13}$, $VO_x$, $Nb_2O_5$, $Bi_2O_3$ and $Sb_2O_3$; group VI metal compounds such as $CrO_3$, $Cr_2O_3$, $MoO_3$, $MoS_2$, $WO_3$ and $SeO_2$; group VII metal compounds such as $MnO_2$ and $Mn_2O_4$; group VIII metal compounds such as $Fe_2O_3$, FeO, $Fe_3O_4$, $Ni_2O_3$, NiO and $CoO_2$; and conductive polymeric compounds such as polypyrrole, polyaniline, poly(p-phenylene), polyacetylene and polyacene.

Suitable positive electrode active materials that may be used in lithium ion secondary cells include chalcogen compounds capable of adsorbing and releasing lithium ions, and lithium ion-containing chalcogen compounds.

Examples of such chalcogen compounds capable of adsorbing and releasing lithium ions include $FeS_2$, $TiS_2$, $MoS_2$, $V_2O_5$, $V_6O_{13}$ and $MnO_2$.

Specific examples of lithium ion-containing chalcogen compounds include $LiCoO_2$, $LiMnO_2$, $LiMn_2O_4$, $LiMo_2O_4$, $LiV_3O_8$, $LiNiO_2$ and $Li_xNi_yM_{1-y}O_2$ (wherein M is at least one metal element selected from among cobalt, manganese, titanium, chromium, vanadium, aluminum, tin, lead and zinc; $0.05 \leq x \leq 1.10$; and $0.5 \leq y \leq 1.0$).

In addition to the binder resin and the positive electrode active material described above, if necessary, the binder composition for the positive electrode may include also an electrically conductive material. Illustrative examples of the conductive material include carbon black, Ketjenblack, acetylene black, carbon whiskers, carbon fibers, natural graphite and artificial graphite.

The positive electrode binder composition of the invention typically includes 1,000 to 5,000 parts by weight, and preferably 1,200 to 3,500 parts by weight, of the positive electrode active material and 20 to 500 parts by weight, and preferably 50 to 400 parts by weight, of the conductive material per 100 parts by weight of the binder resin.

The negative electrode is produced by coating one or both sides of a negative electrode current collector with a negative electrode binder composition composed primarily of a binder resin and a negative electrode active material. The same binder resin may be used as in the positive electrode. The negative electrode binder composition composed primarily of a binder resin and a negative electrode active-material is melted and blended, then extruded as a film to form a negative electrode.

The negative electrode current collector may be made of a suitable material such as copper, stainless steel, titanium or nickel. Of these, copper is especially preferred, both in terms of performance and cost. The current collector used may be in any of various forms, including foil, expanded metal, sheet, foam, wool, or a three-dimensional structure such as a net.

The negative electrode active material is selected as appropriate for the electrode application, the type of cell and other considerations. Active materials suitable for use in the negative electrode of a lithium secondary cell, for example, include alkali metals, alkali metal alloys, carbonaceous materials, and the same materials as mentioned above for the positive electrode active material.

Examples of suitable alkali metals include lithium, sodium and potassium. Examples of suitable alkali metal alloys include metallic Li, Li-Al, Li-Mg, Li-Al-Ni, Na, Na-Hg and Na-Zn.

Examples of suitable carbonaceous materials include graphite, carbon black, coke, glassy carbon, carbon fibers, and sintered bodies obtained from any of these.

In a lithium ion secondary cell, use may be made of a material which reversibly holds and releases lithium ions. The material capable of reversibly adsorbing and releasing lithium ions may be a carbonaceous material such as a non-graphitizable carbonaceous material or a graphite material. Specific examples of suitable carbonaceous materials include pyrolytic carbon, cokes (e.g., pitch coke, needle coke, petroleum coke), graphites, glassy carbons, fired organic polymeric materials (materials such as phenolic resins or furan resins that have been carbonized by firing at a suitable temperature), carbon fibers, and activated carbon. Use can also be made of materials capable of reversibly adsorbing and releasing lithium ions, including polymers such as polyacetylene and polypyrrole, and oxides such as $SnO_2$.

In addition to the binder resin and the negative electrode active material described above, if necessary, the binder composition for the negative electrode may include also a conductive material. Illustrative examples of the conductive material include the same as those mentioned above for the positive electrode binder.

The negative electrode binder composition typically includes 500 to 1,700 parts by weight, and preferably

700 to 1,300 parts by weight, of the negative electrode active material and 0 to 70 parts by weight, and preferably 0 to 40 parts by weight, of the conductive material per 100 parts by weight of the binder resin.

The above-described negative electrode binder composition and positive electrode binder composition are generally used together with a dispersant in the form of a paste. Suitable dispersants include polar solvents such as N-methyl-2-pyrrolidone, dimethylformamide, dimethylacetamide and dimethylsulfamide. The dispersant is typically added in an amount of about 30 to 300 parts by weight per 100 parts by weight of the positive electrode or negative electrode binder composition.

No particular limitation is imposed on the method of shaping the positive electrode and the negative electrode as thin films, although it is preferable in each case to apply the composition by a suitable means such as roller coating with an applicator roll. screen coating, doctor blade coating, spin coating or bar coating so as to form an active material layer having a uniform thickness when dry of 10 to 200 µm, and especially 50 to 150 µm.

The separator disposed between the resulting positive and negative electrodes is preferably (1) a separator prepared by impregnating a separator base with the polymer gel electrolyte composition, then carrying out a chemical reaction to effect curing, or (2) the above-described polymer gel electrolyte of the invention.

Illustrative, non-limiting examples of the separator base used in the first type of separator (1) include fluoropolymers, polyethers such as polyethylene oxide and polypropylene oxide, polyolefins such as polyethylene and polypropylene, polyacrylonitrile, polyvinylidene chloride, polymethyl methacrylate, polymethyl acrylate, polyvinyl alcohol, polymethacrylonitrile, polyvinyl acetate, polyvinyl pyrrolidone, polyethyleneimine, polybutadiene, polystyrene, polyisoprene, polyurethane and derivatives of any of the above polymers, as well as cellulose, paper and nonwoven fabric. These may be used alone or as combinations of two or more thereof.

The secondary cells of the invention are assembled by stacking, fan-folding or winding a cell assembly composed of the positive electrode, the negative electrode, and the separator therebetween, each of the components being prepared as described above. The cell assembly is formed into a laminate or coin-like shape, then placed within a battery housing such as a battery can or a laminate pack, following which the battery housing is mechanically sealed if it is a can or heat-sealed if it is a laminate pack. In the case of secondary cells made using the above-described first type of separator (1), after the separator base has been positioned between the positive electrode and negative electrode and the resulting assembly has been placed in a battery housing, the housing is filled with the polymer gel electrolyte composition of the invention so that the composition thoroughly penetrates between the electrodes and into gaps between the separator and the electrodes, then is reacted to effect curing.

In the resulting secondary cell of the invention, the above-described polymer gel electrolyte has a high tackiness and is capable of serving as the binder component and fully exhibiting the ability to firmly bond together the positive and negative electrodes. Accordingly, separation does not arise even in film-type batteries which are prone to separation of the polymer gel electrolyte from the positive electrode and the negative electrode on account of the absence of a coiling pressure (meaning that pressure is not applied between the positive electrode and the polymer gel electrolyte and between the polymer gel electrolyte and the negative electrode).

The resulting secondary cells of the invention can be operated at a high capacity and a high current without compromising their outstanding performance characteristics, such as an excellent charge/discharge efficiency, high energy density, high output density and long life. The cells thus are highly suitable in a broad range of applications, particularly as lithium secondary cells and lithium ion secondary cells.

The secondary cells according to the invention are well-suited for use in a broad range of applications, including main power supplies and memory backup power supplies for portable electronic equipment such as camcorders, notebook computers, mobile phones and what are known as "personal handyphone systems" (PHS) in Japan, uninterruptible power supplies for equipment such as personal computers, in transport devices such as electric cars and hybrid cars, and together with solar cells as energy storage systems for solar power generation.

Electrical Double-Layer Capacitor of the Invention

The electrical double-layer capacitor of the invention includes a pair of polarizable electrodes and an electrolyte therebetween. The polymer gel electrolyte of the invention serves as the electrolyte.

The polarizable electrodes are typically made of a current collector coated with a polarizable electrode composition composed primarily of a carbonaceous material and a binder polymer.

The polarizable electrodes may also be formed by melting and blending a polarizable electrode binder composition composed primarily of a binder resin and activated carbon, then extruding the composition as a film.

The binder resin may be the matrix polymer used in the above-described polymer gel electrolyte of the invention, or another binder resin commonly employed as an electrode binder resin in electrical double-layer capacitors. Having the binder resin be the same polymeric material as the matrix polymer in the polymer gel electrolyte of the invention is preferable for lowering the internal resistance of the capacitor.

Illustrative, non-limiting examples of the carbonaceous material include those manufactured by carbonization

from plant-based materials such as wood, sawdust, coconut shells and pulp spent liquor; fossil fuel-based materials such as coal and petroleum fuel oil, as well as fibers spun from coal or petroleum-based pitch obtained by the thermal cracking of such fossil fuel-based materials or from tar pitch; and synthetic polymers, phenolic resins, furan resins, polyvinyl chloride resins, polyvinylidene chloride resins, polyimide resins, polyamide resins, liquid-crystal polymers, plastic waste and reclaimed tire rubber. Or the carbonaceous material may be an activated carbon manufactured by carbonizing, then activating, any of the above starting materials. Activated carbons prepared by chemical activation using potassium hydroxide are especially preferred because they tend to provide a larger electrostatic capacitance than steam-activated product.

Activated carbons exist in a variety of forms, including ground or granulated particles, fibers, felt, woven fabric and sheet, any of which may be used in the present invention.

The amount of activated carbon included in the binder composition for polarizable electrodes is 500 to 10,000 parts by weight, and preferably 1,000 to 4,000 parts by weight, per 100 parts by weight of the binder resin. The addition of too much activated carbon may lower the bond strength of the binder composition, resulting in poor adhesion to the current collector. On the other hand, too little activated carbon may have the effect of increasing the electrical resistance, and thus lowering the capacitance, of the polarizable electrodes produced with the composition.

A conductive material may be added to the above-described carbonaceous material. The conductive material may be any suitable material capable of conferring electrical conductivity to the carbonaceous material. Illustrative, non-limiting, examples include carbon black, Ketjenblack, acetylene black, carbon whiskers, carbon fibers, natural graphite, artificial graphite, titanium oxide, ruthenium oxide, and metallic fibers such as aluminum and nickel. Any one or combinations of two or more thereof may be used. Of these, Ketjenblack and acetylene black, which are both types of carbon black, are preferred.

The average particle size of the conductive material, though not subject to any particular limitation, is preferably 10 nm to 10 μm, more preferably 10 to 100 nm, and even more preferably 20 to 40 nm. It is especially advantageous for the conductive material to have an average particle size which is from 1/5000 to 1/2, and preferably from 1/1000 to 1/10, the average particle size of the carbonaceous material.

The amount of conductive material added is not subject to any particular limitation, although an amount of from 0.1 to 20 parts by weight, and especially 0.5 to 10 parts by weight, per 100 parts by weight of the carbonaceous material is desirable for achieving a good capacitance and imparting electrical conductivity.

The binder composition for polarizable electrodes is generally used together with a diluting solvent in the form of a paste. Suitable diluting solvents include N-methyl-2-pyrrolidone, acetonitrile, tetrahydrofuran, acetone, methyl ethyl ketone, 1,4-dioxane and ethylene glycol dimethyl ether. The diluting solvent is typically added in an amount of about 30 to 300 parts by weight per 100 parts by weight of the polarizable electrode binder composition.

No particular limitation is imposed on the method of shaping the polarizable electrodes as thin films, although it is preferable to apply the composition by a suitable means such as roller coating with an applicator roll, screen coating, doctor blade coating, spin coating or bar coating so as to form an activated carbon layer having a uniform thickness after drying of 10 to 500 μm, and especially 50 to 400 μm.

The separator disposed between the resulting pair of polarizable electrodes is preferably (1) a separator prepared by impregnating a separator base with the polymer gel electrolyte composition, then carrying out a chemical reaction to effect curing, or (2) the above-described polymer gel electrolyte of the invention.

The separator base used in the first type of separator (1) may be a material commonly used as a separator base in electrical double-layer capacitors. Illustrative examples include polyethylene nonwoven fabric, polypropylene nonwoven fabric, polyester nonwoven fabric, polytetrafluoroethylene porous film, kraft paper, sheet laid from a blend of rayon fibers and sisal fibers, manila hemp sheet, glass fiber sheet, cellulose-based electrolytic paper, paper made from rayon fibers, paper made from a blend of cellulose and glass fibers, and combinations thereof in the form of multilayer sheets.

The electrical double-layer capacitors of the invention are assembled by stacking, fan-folding or winding an electrical double-layer capacitor assembly composed of a pair of polarizable electrodes with a separator therebetween, each of the components being prepared as described above. The capacitor assembly is formed into a coin-like or laminate shape, then placed within a capacitor housing such as a capacitor can or a laminate pack. The assembly is then filled with the polymer electrolyte solution of the invention, and cured by a chemical reaction, following which the capacitor housing is mechanically sealed if it is a can or heat-sealed if it is a laminate pack. In the case of capacitors made using the above-described first type of separator (1), after the separator base has been positioned between the pair of polarizable electrodes and the resulting assembly has been placed in a capacitor housing, the housing is filled with the polymer gel electrolyte composition of the invention so that the composition thoroughly penetrates between the electrodes and into gaps between the separator and the electrodes, then is reacted to effect curing.

The resulting electrical double-layer capacitors of the invention have a high performance, including a high output voltage, a large output current and a broad service temperature range, without compromising their outstanding characteristics, such as an excellent charge/discharge efficiency, a high energy density, a high output density and a

long life.

The inventive electrical double-layer capacitors are thus highly suitable for use in a broad range of applications, including memory backup power supplies for electronic equipment such as personal computers and wireless terminals, uninterruptible power supplies for personal computers, in transport equipment such as electric cars and hybrid cars, together with solar cells as energy storage systems for solar power generation, and in combination with batteries as load-leveling power supplies.

## EXAMPLE

The following synthesis examples, examples of the invention and comparative examples are provided to illustrate the invention, and are not intended to limit the scope thereof.

### Synthesis Example 1

Synthesis of Polymeric Compound (1)

A reaction vessel equipped with a stirring element was charged with 3 parts by weight of polyvinyl alcohol (number-average degree of polymerization, 1,500; vinyl alcohol fraction, ≥98%), 20 parts by weight of 1,4-dioxane and 14 parts by weight of acrylonitrile. A solution of 0.16 part by weight of sodium hydroxide in 1 part by weight of water was gradually added under stirring, after which stirring was continued for 10 hours at 25°C.

The resulting mixture was neutralized using an ion-exchange resin (Amberlite IRC-76, produced by Organo Corporation). The ion-exchange resin was separated off by filtration, after which 50 parts by weight of acetone was added to the solution and the insolubles were filtered off. The resulting acetone solution was placed in dialysis membrane tubing and dialyzed with running water. The polymer which precipitated within the dialysis membrane tubing was collected and re-dissolved in acetone. The resulting solution was filtered, following which the acetone was evaporated off, giving a cyanoethylated polyvinyl alcohol derivative.

The infrared absorption spectrum of this polymeric compound (polymer derivative) showed no hydroxyl group absorption, confirming that all the hydroxyl groups were capped with cyanoethyl groups (capping ratio, 100%).

### Reference Example 1

Synthesis of Polymeric Compound (2) Used in Comparative Examples

A reaction vessel equipped with a stirring element was charged with 10 parts by weight of polyvinyl alcohol (number-average degree of polymerization, 1,500; vinyl alcohol fraction, ≥98%) and 150 parts by weight of dimethyl sulfoxide. A solution of 1.81 parts by weight of sodium hydroxide in 2.5 parts by weight of water was gradually added under stirring, after which stirring was continued for 1 hour at room temperature. To this solution was gradually added, over a period of 3 hours, a solution of 67 parts by weight of glycidol in 100 parts by weight of dimethyl sulfoxide. The resulting mixture was stirred for 8 hours at 50°C to effect the reaction. The uniform solution obtained following reaction completion was diluted with water, then neutralized with acetic acid. The neutralized product was purified by dialysis, and the resulting solution was freeze-dried, giving 30.01 parts by weight of dihydroxypropylated polyvinyl alcohol.

Three parts by weight of the resulting polymer was mixed with 20 parts by weight of dioxane and 14 parts by weight of acrylonitrile. To this mixed solution was added a solution of 0.16 part by weight of sodium hydroxide in 1 part by weight of water, and stirring was carried out for 10 hours at 25°C. The resulting mixture was neutralized using an ion-exchange resin (Amberlite IRC-76, produced by Organo Corporation). The ion-exchange resin was separated off by filtration, after which 50 parts by weight of acetone was added to the solution and the insolubles were filtered off. The resulting acetone solution was placed in dialysis membrane tubing and dialyzed with running water. The polymer which precipitated within the dialysis membrane tubing was collected and re-dissolved in acetone. The resulting solution was filtered, following which the acetone was evaporated off, giving a cyanoethylated dihydroxypropyl polyvinyl alcohol.

The infrared absorption spectrum of this polymeric compound (polymer derivative) showed no hydroxyl group absorption, confirming that all the hydroxyl groups were capped with cyanoethyl groups (capping ratio, 100%).

### Reference Example 2

Synthesis of Polymeric Compound (3) Used in Comparative Examples

8 grams of hydroxypropyl cellulose (number-average molecular weight, 500; molar substitution, 4.65; product of Nippon Soda Co., Ltd.) was suspended in 400 mL of acrylonitrile, following which 1 mL of 4 wt% aqueous sodium

hydroxide was added and the mixture was stirred for 4 hours at 30°C.

The reaction mixture was neutralized with acetic acid then poured into a large amount of methanol, giving cyanoethylated hydroxypropyl cellulose.

To remove the impurities, the cyanoethylated hydroxypropyl cellulose was dissolved in acetone, following which the solution was placed in a dialysis membrane tube and purified by dialysis using ion-exchanged water. The cyanoethylated hydroxypropyl cellulose which settled out during dialysis was collected and dried.

Elemental analysis of the resulting cyanoethylated hydroxypropyl cellulose indicated a nitrogen content of 7.3 wt%. Based on this value, the proportion of the hydroxyl groups on the hydroxypropyl cellulose that were capped with cyanoethyl groups was 94%.

Example 1

Preparation of Polymer Gel Electrolyte (1)

An electrolyte solution was prepared by mixing ethylene carbonate and diethyl carbonate in a 1:1 volumetric ratio, then dissolving in the resulting mixture lithium hexafluorophosphate ($LiPF_6$) as the ion-conductive salt to a concentration of 1 M.

Next, 100 parts by weight of polyethylene glycol dimethacrylate (number of oxyethylene units = 9) and 8.41 parts by weight of trimethylolpropane trimethacrylate were mixed, following which 0.5 part by weight of the cyanoethylated polyvinyl alcohol obtained in Synthesis Example 1 was added as the polymeric compound to 100 parts by weight of the methacrylate monomer mixture to give a pregel composition.

7 parts by weight of the pregel composition was added to 93 parts by weight of the electrolyte solution prepared above, then 0.05 part by weight of azobisisobutyronitrile was added and the contents were thoroughly mixed, giving a polymer gel electrolyte composition.

The polymer electrolyte composition was placed in a specific vessel and heated at 55°C for 2 hours to effect a crosslinking reaction, thereby forming a polymer gel electrolyte. The polymer gel electrolyte was a clear, colorless gel having resilience and a high strength.

Example 2

Preparation of Polymer Gel Electrolyte (2)

A polymer gel electrolyte composition was prepared by the same method as in Example 1, except that the amount of electrolyte solution was set at 90 parts by weight and the amount of pregel composition was set at 10 parts by weight. The composition was heated, as in Example 1, at 55°C for 2 hours to effect a crosslinking reaction. The resulting polymer gel electrolyte was a clear, colorless, high-strength gel that was slightly hard yet resilient.

Comparative Example 1

Preparation of Polymer Gel Electrolyte (3)

A polymer gel electrolyte composition was prepared by the same method as in Example 2, except that the cyanoethylated polyvinyl alcohol prepared in Synthesis Example 1 was not used. As in Example 1, the resulting composition was heated at 55°C for 2 hours to effect a crosslinking reaction. However, the overall composition failed to gel, and so a polymer gel electrolyte was not obtained.

Comparative Example 2

Preparation of Polymer Gel Electrolyte (4)

A polymer gel electrolyte composition was prepared by the same method as in Example 3, except that the amount of electrolyte solution was set at 85 parts by weight and the amount of pregel composition was set at 15 parts by weight. As in Example 1, the resulting composition was heated at 55°C for 2 hours to effect a crosslinking reaction. The resulting polymer gel electrolyte was a clear, colorless, high-strength gel that was hard and crumbly. The amount of pregel composition was the minimum amount required for gelation.

Table 1 below shows whether the polymer gel electrolytes obtained in the above examples and comparative examples underwent gelation, the physical properties of the gel if achieved, and the mixing ratios of the components in each case.

Table 1

| | (pregel composition)/ (polymer gel electrolyte composition) | (polymeric compound)/ (methacrylate monomer mixture) | Electrolyte solution | Gelation and properties of gel |
|---|---|---|---|---|
| Example 1 | 7/100 | 0.5/100 | 93 | resilient, high-strength gel |
| Example 2 | 10/100 | 0.5/100 | 90 | high-strength gel that was slightly hard yet had resilience |
| Comparative Example 1 | 10/100 | 0/100 | 90 | did not gelate |
| Comparative Example 2 | 15/100 | 0/100 | 85 | hard, crumbly gel |

It is apparent from the results in Table 1 that when polymeric compound was not added (Comparative Examples 1 and 2), gelation did not occur with the same amount of pregel composition as when polymeric compound was added (Examples 1 and 2). That is, more pregel composition was required to achieve gelation in the absence of the polymeric compound. In Comparative Example 2, a gel was achieved using an increased amount of pregel composition, but the physical properties of the gel differed. Hence, a high-strength gel was clearly unattainable in this way.

Example 3

Production of a Secondary Cell (1)

Fabrication of Positive Electrode:

90 parts by weight of $LiCoO_2$ as the positive electrode active material, 6 parts by weight of Ketjenblack as the conductive material, 40 parts by weight of a resin solution prepared beforehand by dissolving 10 parts by weight of polyvinylidene fluoride in 90 parts by weight of N-methyl-2-pyrrolidone, and 20 parts by weight of N-methyl-2-pyrrolidone were stirred and mixed to give a paste-like positive electrode binder composition. The composition was coated onto aluminum foil with a doctor blade to a dry film thickness of 100 μm, then dried at 80°C for 2 hours to form a positive electrode.

Fabrication of Negative Electrode:

90 parts by weight of mesocarbon microbeads (MCMB6-28, produced by Osaka Gas Chemicals Co., Ltd.) as the negative electrode active material, 100 parts by weight of a resin solution prepared beforehand by dissolving 10 parts by weight of polyvinylidene fluoride in 90 parts by weight of N-methyl-2-pyrrolidone, and 20 parts by weight of N-methyl-2-pyrrolidone were stirred and mixed to give a paste-like negative electrode binder composition. The composition was coated onto copper foil with a doctor blade to a dry film thickness of 100 μm, then dried at 80°C for 2 hours to form a negative electrode.

Fabrication of Secondary Cell:

A cell assembly was produced by placing a separator base between the positive and negative electrodes fabricated above, then inserting the laminate into an aluminum laminate case. Next, the polymer gel electrolyte composition prepared in Example 1 was introduced into the assembly, following which the laminate pack was sealed, then heated at 55°C for 2 hours to effect curing via a chemical reaction, giving a laminate-type lithium polymer secondary cell having the construction shown in FIG. 1.

Comparative Example 3

Production of a Secondary Cell (2)

Aside from using the polymer gel electrolyte composition obtained in Comparative Example 2 instead of the polymer gel electrolyte composition obtained in Example 1, a laminate-type lithium polymer secondary cell was produced in the same way as in Example 3.

Comparative Example 4

Production of a Secondary Cell (3)

Aside from using the cyanoethylated dihydroxypropyl polyvinyl alcohol prepared in Reference Example 1 instead of cyanoethylated polyvinyl alcohol, a polymer gel electrolyte composition was prepared in the same way as in Example 1. The resulting composition was used to produce a laminate-type lithium polymer secondary cell in the same way as in Example 3.

Comparative Example 5

Production of a Secondary Cell (4)

Aside from using as the polymer compound 6 parts by weight of the cyanoethylated hydroxypropyl cellulose prepared in Reference Example 2 in place of 0.5 part by weight of cyanoethylated polyvinyl alcohol, a polymer gel electrolyte composition was prepared in the same way as in Example 1. The resulting composition was used to produce a laminate-type lithium polymer secondary cell in the same way as in Example 3. The amount of cyanoethylated hydroxypropyl cellulose used was the minimum amount required to effect gelation from 93 parts by weight of the electrolyte solution and 7 parts by weight of pregel composition.

Prior to introducing the polymer gel electrolyte compositions obtained in each of the above examples and comparative examples into the cell assembly, the viscosities of the compositions were measured. Viscosity measurements were carried out at 20°C using a Brookfield viscometer.

The secondary cells obtained in the various above examples and comparative examples were each subjected to the charging test described below. The results are given in Table 2.

(1) Charging Load Characteristic Test

Constant-current, constant-voltage charging was carried out at an upper limit voltage during charging of 4.2 V and a charging rate of 0.5C. The final voltage during discharging was set at 3.0 V, and constant-current discharge was carried out at charging rates of 0.5C and 2.0C. The load characteristic was calculated as the ratio of the discharge capacitance at 2.0C to the discharge capacitance at 0.5C.

$$\text{Load characteristic (\%)} = \text{(discharge capacitance at 2.0C)} / \text{(discharge capacitance at 0.5C)} \times 100$$

(2) Low-Temperature Characteristic Test

Constant-current, constant-voltage charging was carried out at 20°C (room temperature), an upper limit voltage during charging of 4.2 V and a charging rate of 0.5C. The final voltage during discharging was set to 3 V, and constant-current discharge was carried out at temperatures of 20°C and -10°C and a discharging rate of 0.5C. The low-temperature characteristic was calculated as the ratio of the discharge capacitance at -10°C to the discharge capacitance at 20°C.

Low-temperature characteristic (%) =

(discharge capacitance at -10°C) /

(discharge capacitance at 20°C) × 100

Table 2

| | Polymeric compound | | Viscosity (cP) | Load characteristic (%) | Low-temperature characteristic (%) |
|---|---|---|---|---|---|
| | Compound name | (Polymeric compound) / (methacrylate monomer mixture) | | | |
| Example 3 | cyanoethylated | 0.5 | 19 | 92 | 75 |
| Comparative Example 3 | - | 0 | 256 | 31 | 22 |
| Comparative Example 4 | cyanoethylated dihydroxypropyl PVA | 0.5 | 72 | 75 | 52 |
| Comparative Example 5 | cyanoethylated hydroxypropyl cellulose | 6 | 159 | 63 | 41 |

It is apparent from Table 2 that the polymer gel electrolyte composition used in Example 3 had a lower viscosity than the polymer gel electrolyte compositions used in the comparative examples. The composition in Example 3 was thus able to thoroughly penetrate the cell assembly, making it possible to achieve a secondary cell having excellent load and low-temperature characteristics.
By contrast, the polymer gel compositions used in Comparative Examples 3 to 5 had high liquid viscosities and thus a poor ability to penetrate the cell assembly. As a result, the lithium polymer secondary cells obtained had load and low-temperature characteristics inferior to those of the secondary cell obtained in Example 3.
The polymer gel electrolyte composition of the invention, being composed primarily of a polymeric compound with relatively short side chains that contains polyvinyl alcohol units in which some or all of the hydroxyl groups on the polyvinyl alcohol units are substituted with cyanated monovalent hydrocarbon groups, an ion-conductive salt, a compound having at least two reactive double bonds on the molecule, and an organic electrolyte solution, is capable of forming a semi-interpenetrating polymer network structure. The ability to form such a structure makes it possible to reduce the amount of pregel composition and to lower the liquid viscosity of the polymer gel electrolyte composition prior to gelation. In addition, the inventive composition is capable of providing a high-strength polymer gel electrolyte endowed with excellent shape retention, ion conductivity and tackiness. Such polymer gel electrolytes can in turn be used to produce secondary cells having excellent battery characteristics, including load and low-temperature characteristics.

**Claims**

**1.** A polymer gel electrolyte composition comprising:

(A) a polymeric compound having an average degree of polymerization of at least 20 which contains polyvinyl alcohol units of the following general formula (1):

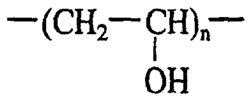

(1)

wherein n is a number of at least 20 and some or all of the hydroxyl groups on the polyvinyl alcohol units are substituted with cyanated monovalent hydrocarbon groups;

(B) an ion-conductive salt;

(C) a compound having at least two reactive double bonds on the molecule; and

(D) an organic electrolyte solution.

**2.** The polymer gel electrolyte composition of claim 1, wherein the polymeric compound is included in an amount, based on the compound having at least two reactive double bonds, of 0.01 to 10 wt%.

**3.** The polymer gel electrolyte composition of claim 1 or 2, wherein the cyanated monovalent hydrocarbon group in the polymeric compound is cyanoethyl.

**4.** A polymer gel electrolyte prepared by gelating the polymer gel electrolyte composition of any one of claims 1 to 3, which electrolyte has a semi-interpenetrating polymer network structure wherein molecular chains of the polymeric compound are intertwined with a three-dimensional polymer network structure formed by crosslinking the compound having at least two reactive double bonds.

**5.** A secondary cell comprising a positive electrode, a negative electrode and an electrolyte, wherein the electrolyte is a polymer gel electrolyte according to claim 4.

**6.** An electrical double-layer capacitor comprising a pair of polarizable electrodes and an electrolyte disposed therebetween, wherein the electrolyte is a polymer gel electrolyte according to claim 4.

# FIG.1

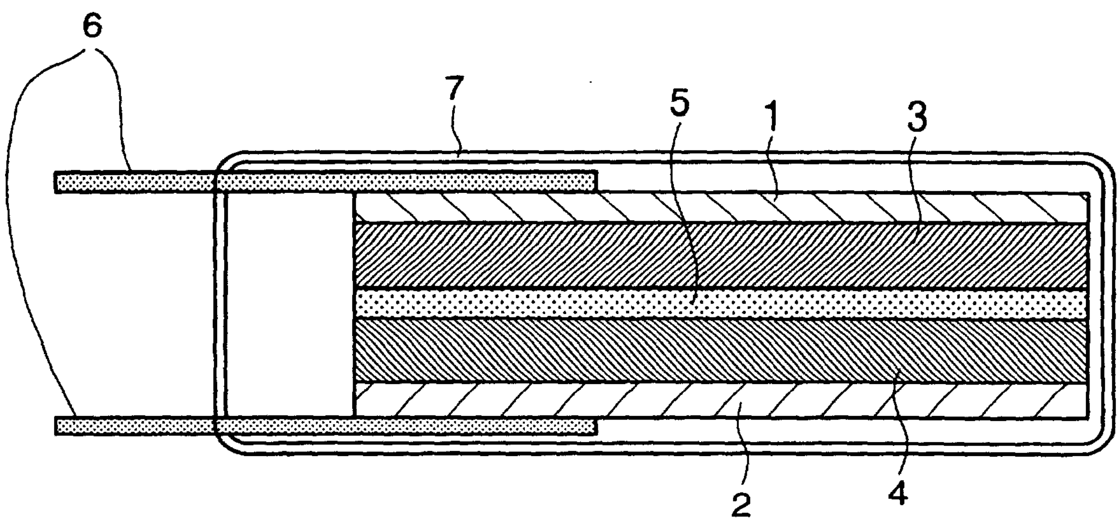

## INTERNATIONAL SEARCH REPORT

International application No.
PCT/JP02/03670

A. CLASSIFICATION OF SUBJECT MATTER
Int.Cl[7] H01M10/40, H01M6/18, H01B1/06, H01G9/038, C08F8/00, C08L29/04, C08K3/00

According to International Patent Classification (IPC) or to both national classification and IPC

B. FIELDS SEARCHED

Minimum documentation searched (classification system followed by classification symbols)
Int.Cl[7] H01M10/40, H01M6/18, H01B1/06, H01G9/038, C08F8/00, C08L29/04, C08K3/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | EP 1090956 A1 (Nisshinbo Industries, Inc.), 11 April, 2001 (11.04.01), Claims; Par. Nos. [0068], [0069] & WO 00/56815 A1 & WO 00/57440 A1 & WO 00/56780 A1 | 1-6 |
| A | EP 1090932 A1 (Nisshinbo Industries, Inc.), 11 April, 2001 (11.04.01), Claims; Par. Nos. [0068], [0069] & WO 00/56815 A1 & WO 00/57440 A1 & WO 00/56780 A1 | 1-6 |
| A | EP 1057846 A1 (Nisshinbo Industries, Inc.), 06 December, 2000 (06.12.00), Claims & WO 00/35991 A1 | 1-6 |

☒ Further documents are listed in the continuation of Box C.    ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 July, 2002 (03.07.02) | 16 July, 2002 (16.07.02) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/03670

C (Continuation). DOCUMENTS CONSIDERED TO BE RELEVANT

| Category* | Citation of document, with indication, where appropriate, of the relevant passages | Relevant to claim No. |
|---|---|---|
| A | EP 757397 A1 (Nisshinbo Industries, Inc.), 05 February, 1997 (05.02.97), Claims & JP 9-50824 A & US 5641590 A & CA 2163064 A | 1-6 |
| A | EP 714149 A1 (Nisshinbo Industries, Inc.), 29 May, 1996 (29.05.96), Claims & JP 8-225626 A & US 5571392 A & CA 2163065 A | 1-6 |
| A | JP 10-21964 A (Fuji Photo Film Co., Ltd.), 23 January, 1998 (23.01.98), Claims 1 to 8 (Family: none) | 1-6 |
| A | JP 11-354158 A (Mitsubishi Chemical Corp.), 24 December, 1999 (24.12.99), Claims 1 to 8 (Family: none) | 1-6 |
| A | JP 11-354159 A (Mitsubishi Chemical Corp.), 24 December, 1999 (24.12.99), Claims 1 to 6 (Family: none) | 1-6 |
| A | JP 2000-311715 A (Mitsubishi Chemical Corp.), 07 November, 2000 (07.11.00), Claims 1 to 8 (Family: none) | 1-6 |
| A | JP 2000-294284 A (Mitsubishi Chemical Corp.), 20 October, 2000 (20.10.00), Claims 1 to 9 (Family: none) | 1-6 |
| P,A | JP 2002-175837 A (Nisshinbo Industries, Inc.), 21 June, 2002 (21.06.02), Claims 1 to 15 (Family: none) | 1-6 |

Form PCT/ISA/210 (continuation of second sheet) (July 1998)